# EUROPEAN PATENT APPLICATION

(11) **EP 4 652 828 A1**
(43) Date of publication of application: **26.11.2025**
(21) Application number: 25171910.0
(22) Date of filing: 23.04.2025
(51) Int. Cl.: A01D 41/12, A01D 41/127, A01D 43/073, A01D 43/08, A01D 90/10, B60P 1/42

(54) **USING A WEIGHT VERSUS POSITION PROFILE TO CONTROL AUTOMATED UNLOADING**

(30) Priority: 23.05.2024 US 202418672570
(71) Applicant: Deere & Company, Moline, IL 61265 (US)
(72) Inventor: Wonderlich, Grant J., Mannheim (DE); Corban, Stephen R., Mannheim (DE); Vande Haar, William J., Mannheim (DE)
(74) Representative: Holst, Sönke

(57) **Abstract**

An unloading control system accesses a weight/mass versus position fill profile (182) for an identified container (118). The unloading control system generates control signals to position the material transfer vehicle (106) so that an initial landing point of material in the container (118) is at a desired positioned based upon the fill profile (182). The unloading control system generates control signals to unload material into the container (118) according to the weight/mass versus position fill profile (182) and obtains an indication of the weight/mass of material transferred. The control system generates control signals to control the landing point of material in the container (118) based upon the fill profile (182) and the weight/mass of material transferred.

## Description

The present description relates to agricultural machines. More specifically, the present description relates to controlling an unloading operation from a material transfer vehicle to a container, such as a haulage vehicle.

### BACKGROUND

There is a wide variety of different types of agricultural equipment. Some such agricultural equipment includes agricultural harvesters. Agricultural harvesters often engage crop, process that crop, and unload that crop into a material transfer vehicle, such as a tractor-pulled grain cart (for example).

Once the grain cart is filled to a desired fill level, a propulsion vehicle (such as a tractor or other vehicle) that pulls the grain cart navigates toward a container, such as a semi-trailer, pulls alongside the container, and transfers the harvested material to the container. As the propulsion vehicle approaches the container, a control system or operator positions an unloading spout or auger, and then, once alongside the container, engages the unloading auger on the grain cart to unload the harvested material from the grain cart into the container.

The discussion above is merely provided for general background information and is not intended to be used as an aid in determining the scope of the claimed subject matter.

### SUMMARY

An unloading control system accesses a weight/mass versus position fill profile for an identified container. The unloading control system generates control signals to position a material transfer vehicle relative to a container based upon the fill profile. The unloading control system receives a weight/mass signal indicative of the weight/mass of material transferred to the container and generates control signals to control the landing point of material in the container based upon the fill profile and the weight/mass of material transferred.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a pictorial illustration of one example of an agricultural system.
FIG. 2 is a partial pictorial, partial block diagram of the agricultural system shown in FIG. 1, with a material transfer vehicle positioned alongside a container (e.g., a semi-trailer).
FIGS. 3, 4, and 5 show different weight/mass versus position fill profiles corresponding to a container.
FIG. 6 is a block diagram showing one example of weight/mass versus position unloading control system and other items in the agricultural system in more detail.
FIGS. 7A and 7B (collectively referred to herein as FIG. 7) illustrate a flow diagram showing one example of the operation of the weight/mass versus position unloading control system.
FIG. 8 is a block diagram showing one example of the agricultural system shown in other figures, deployed in a remote server environment.
FIGS. 9, 10, and 11 show examples of mobile devices that can be used in the architectures and systems shown in other figures.
FIG. 12 is a block diagram showing one example of a computing environment that can be used in the systems and architectures shown in other figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, a material transfer vehicle transfers material from a harvester to a container (which may be described herein as a semi-trailer but could be another container as well). When a material transfer vehicle approaches a semi-trailer, some current systems have parts of the unloading process automated. For example, some current systems use optical or volumetric estimation systems to automatically control unloading of the material from the material transfer vehicle into the container. In one example, an image capture device or optical sensor (such as a mono or stereo camera) is mounted on the material transfer vehicle to obtain a view inside the container. An image processing system identifies the level of material in the container as it is being transferred from the material transfer vehicle to the container. Based upon the level of material in the container, and based upon a desired fill profile, the material transfer vehicle is automatically moved or nudged along the container to change the landing point of material in the container to achieve the desired fill profile.

However, such systems may encounter conditions which make automated control more difficult. For instance, when the material transfer vehicle begins to transfer material to the container, this often causes a plume or cloud of dust or other obscurants to rise from the container which may make it difficult for the image capture device to capture an image if the material in the container. This is just one example of conditions under which it can be difficult for an automated unloading system to operate reliably.

The present description thus describes a system which uses a fill profile that depends on the mass or weight of material transferred to the container. The present description may refer to mass and weight interchangeably, as it is assumed that the effect of the gravitational force on the transferred material will not change. Therefore, either mass or weight can be used. When the term "mass" is used, it is assumed that the term "weight" could just as easily have been used, and vice versa. Thus, once the container is identified, a weight versus position fill profile is accessed for that container. The weight versus position fill profile identifies a weight of material that is to be transferred to a plurality of different positions of the material transfer vehicle relative to the container in order to achieve a desired fill profile. A control system receives an indication of the weight of material transferred to the container. The control system can then control a number of different controllable subsystems to change the relative position of the material transfer vehicle relative to the container. In one example, the controllable subsystems are on the material transfer vehicle (such as a propulsion subsystem, a steering subsystem, a conveyor subsystem, etc.) and the controllable subsystems are controlled to change the landing point of material in the container based upon the weight of material transferred and based on the weight versus position fill profile.

In one example, the control system controls the controllable subsystems to transfer a weight of material at each position of the material transfer vehicle relative to the container. In another example, the control system controls the controllable subsystems to change the position based on the sum of material transferred. For instance, the control system can control the controllable subsystems to transfer a first total weight of material (e.g., 10,000 Ib) by the time the material transfer vehicle reaches a first position relative to the container, and a second total weight of material (e.g., 20,000 Ib) by the time the material transfer vehicle reaches a second position relative to the container , etc.

Also, it will be appreciated that, in some examples, the material may move around in the container after the material lands in the container. Therefore, the controllable subsystems may be controlled based on a weight of material transferred at different positions and/or based on a weight of material located in the container at different positions.

Therefore, in one example, the present description describes a system that is not dependent on an input from a sensor that may be impeded by dust or other obscurants. It will also be noted, however, that the present description describes a system that can be used instead of or in conjunction with other automated unload systems. For instance, in one example, an automated unload system that automatically controls the unloading operation based upon a captured image (an optics-based automated unloading control system) may be used to initiate the unloading operation or to control the overall unloading operation. However, where conditions arise under which the optics-based automated unloading control system is less accurate or has more difficulty operating with a high level of confidence, this may trigger the weight-based automated unloading control system to begin controlling the unloading operation. Then, when conditions improve for the optics-based automated unloading control system (e.g., when the dust cloud dissipates, etc.), then control can be switched back to the optics-based automated unloading control system. This is just one example in which the weight-based automated unloading control system can be used in conjunction with one or more other automated unloading control systems to control an unloading operation.

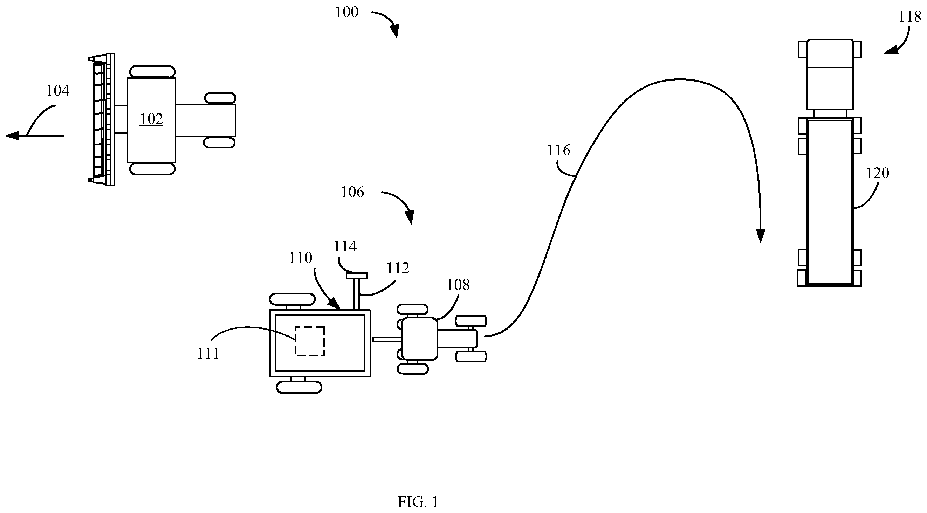

FIG. 1 is a pictorial illustration of one example of an agricultural system 100 in which a harvester 102 is moving through a field in a direction indicated by arrow 104. A material transfer vehicle 106 includes a propulsion vehicle (e.g., a tractor) 108 and a grain cart 110. Grain cart 110 is shown having a conveyor 112, and a spout 114 that are used to unload harvested material from grain cart 110. Conveyor 112 may be a conveyor that conveys material from grain cart 110 through a housing and out an exit end of conveyor 112. Spout 114 may be disposed at the outlet end to direct material as the material exits through the exit end of conveyor 112. FIG. 1 also shows that grain cart 110 has a gate 111 disposed at the bottom of grain cart 110. In order to facilitate the transfer of material out of grain cart 110, the gate is opened to a desired position which allows the grain to fall into a hopper or in another collection basin where it can be transferred by conveyor 112.

In the example shown in FIG. 1, grain cart 110 has been filled with harvested material from harvester 102 and is traveling along a travel path indicated by arrow 116 toward a container (e.g., in the example shown in FIG. 1 the container is a semi-truck) 118. In order to unload material from grain cart 110, an operator (a human operator, an autonomous operator, or a semi-autonomous operator) actuates an actuator to position conveyor 112 to a deployed position. Tractor 108 pulls the grain cart 110 alongside of semi-trailer 120 so that the conveyor 112 can be engaged to transfer material from grain cart 110 into semi-trailer 120. In one example, the spout 114 is movable to change the trajectory of material exiting conveyor 112 and to thus change the landing point of material inside semi-trailer 120. Also, in one example, conveyor 112 is driven by a power takeoff on tractor 108, although it can be driven by other actuators as well. The speed of the power takeoff or other actuator can be controlled to change the landing point as well.

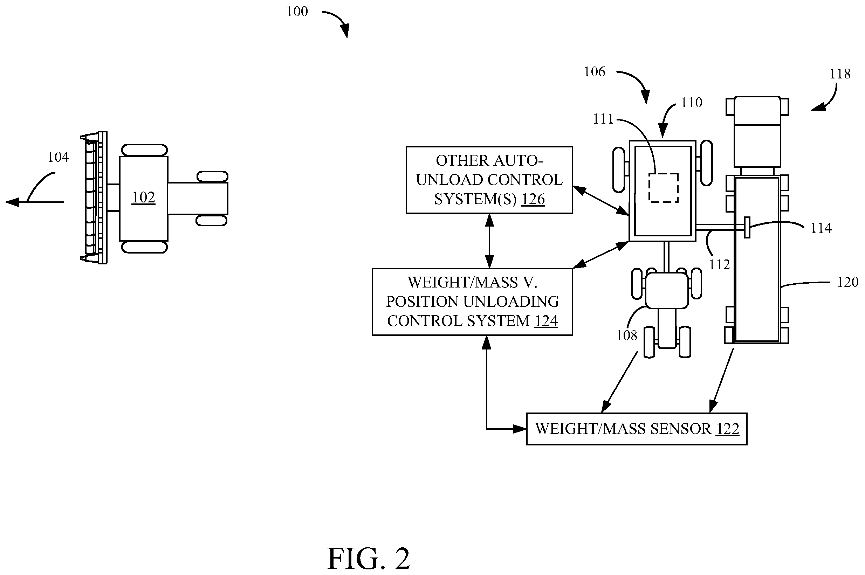

FIG. 2 is similar, in some ways, to FIG. 1 and similar items are similarly numbered. However, FIG. 2 shows that material transfer vehicle 106 has now pulled alongside semi-trailer 120 so that the outlet end of conveyor 112 and spout 114 are positioned over semi-trailer 120. In one example, material transfer vehicle 106 is positioned so that the landing point of material inside semi-trailer 120 is at a desired position. FIG. 2 is also shown as a partial block diagram which includes a weight sensor 122, weight versus position unloading control system 124 (also referred to as unloading control system 124 or system 124), and one or more other auto-unload control system(s) 126 (also referred to as control system(s) 126). Weight sensor 122 senses a variable indicative of the weight of material transferred from grain cart 110 into semi-trailer 120. Sensor 122 generates an output indicative of the sensed weight and provides that output to weight versus position unloading control system 124. Therefore, in one example, weight sensor 122 can be one or more scales on grain cart 110. The scales may be load cells in the axles of grain cart 110, or deployed in other ways. Also, weight sensor 122 may be one or more scales on semi-trailer 120. In another example, weight sensors 122 may be separate from both grain cart 110 and semi-trailer 120. For instance, weight sensor 122 may be one or more scales on which grain cart 110 and/or semi-trailer 120 are parked. Weight sensor 122 may also be a mass flow sensor which senses the mass flow rate of material as it is transferred from grain cart 110 to semi-trailer 120. In another example, weight sensor 122 may sense the air pressure in front and/or rear suspensions in semi-trailer 120. The amount of air or air pressure may be indirectly indicative of the weight of material in semi-trailer 120. Further, weight sensor 122 may include multiple sensors that sense a characteristic indicative of weight at different positions in semi-trailer 120. Such sensors, for example, may include a first sensor that senses an indication of weight on the front axle and a second sensor that senses an indication of the weight on the rear axle of semi-trailer 120. A weight distribution profile can be computed from multiple sensors arranged along the front-to-back length of semi-trailer 120.

In the example where weight sensor 122 is a scale or otherwise deployed on grain cart 110, then the output provided to weight versus position unloading control system 124 will be based upon the weight of material that has been transferred out of grain cart 110. In the example where weight sensor 122 is a scale on semi-trailer 120, then the sensor signal provided to unloading control system 124 will be based upon the increase in weight as material is transferred into semi-trailer 120. In the example where the weight sensor 122 is a scale on which either grain cart 110 or semi-trailer 120 is parked, then the sensor signal will be based upon the change in weight measured by weight sensor 122 as material is transferred from grain cart 110 to semi-trailer 120. Where weight sensor 122 is a mass flow sensor, then the sensor signal will be based on the mass flow rate of material as it is being transferred, and the time during which the transfer takes place.

In operation, weight versus position unloading control system 124 accesses a weight versus position fill profile for semi-trailer 120 (the fill profile). The fill profile will indicate a weight of material to be transferred at different positions of material transfer vehicle 106 relative to the longitudinal axis of semi-trailer 120. Therefore, unloading control system 124 can generate control signals to control the controllable subsystems to change the relative position of material transfer vehicle 106 relative to container 118. In the present discussion, it is assumed that semi-trailer 120 is stationary while material transfer vehicle 106 moves. This is just one example. For purposes of the present example, then, control system 124 generates control signals to control the controllable subsystems on material transfer vehicle 106 (such as the steering and propulsion subsystem) to move material transfer vehicle 106 to a location so that the landing position of material in semi-trailer 120 is at a desired position. Then, unloading control system 124 can generate control signals to control the conveyor (e.g., auger) 112 to begin unloading material into semi-trailer 120. As the unloading operation commences, unloading control system 124 will receive a signal indicative of the weight of material transferred from sensor 122. Unloading control system 124 can then generate control signals to change the position of material transfer vehicle 106 relative to container 118 to thus change where material is transferred (e.g., the landing point of material in semi-trailer 120) according to the weight versus position fill profile. For instance, unloading control system 124 can generate control signals to control the position of conveyor 112 or spout 114 in order to change the position of the landing point, or to control the propulsion and/or steering subsystems to move or nudge material transfer vehicle 106 forward along semi-trailer 120 to change the position of the material transfer vehicle 106 relative to semi-trailer 120. At some point, when the unloading operation is complete (e.g., semi-trailer 120 is filled or all of the material is transferred out of grain cart 110), unloading control system 124 can generate control signals to stop the conveyor 112, to close the gate 111, to move to a different location, etc.

Other auto-unload control systems 126 may include optics-based control systems in which an image is captured of the inside of semi-trailer 120 and a volumetric or fill level estimation is made to identify the fill level of material inside semi-trailer 120. A fill profile can be used to control the unloading operation based upon the estimated fill level of material inside semi-trailer 120. However, as discussed above, there may be difficulties when using an optics-based control system or another control system. For instance, the unloading operation is often performed in a dusty environment in which dust or other obscurants may make it difficult to accurately capture an image of the inside of semi-trailer 120. The two control systems 124 and 126 can still be used together.

As an example in which weight/mass versus position unloading control system 124 works in conjunction with another auto-unload control system 126, assume first that the other auto-unload control system 126 is an optics-based system. Such a system can be used to verify when conveyor 112 is in a desired initial position in order to commence the unloading operation, even when system 124 will be controlling the unloading operation. The position of the initial landing point of material in semi-trailer 120 can be verified by system 126 by capturing an image prior to beginning unloading so the dust cloud has not yet formed. Then, system 126 can process the image using image processing to identify the position of the outlet end of conveyor 112 relative to semi-trailer 120. Then, once the unloading operation is commenced, it may be that a dust plume or other obscurants enter the air impeding the image capture device, in which case the weight versus position unloading control system 124 takes over control of the unloading operation so that the unloading operation can continue, even though the other auto-unload control system 126 is not functioning properly or is having difficulty. If the obscurants clear (which can be sensed by a sensor in system 126 or elsewhere), then control can switch back to the other auto-unload control system 126 from the weight versus position unloading control system 124. The two control systems 124 and 126 can work in conjunction with one another or in other ways as well. Similarly, it may be that only weight versus position unloading control system 124 is used. These and other arrangements and configurations are contemplated herein.

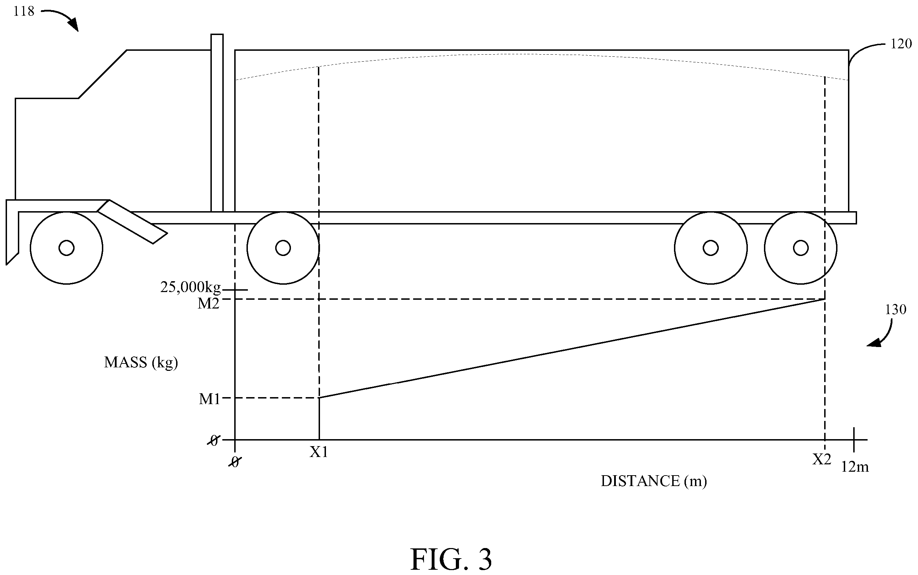

FIGS. 3, 4, and 5 illustrate different mass versus position fill profiles (although weight could be used as well). FIG. 3 shows a constant fill profile (represented by graph 130) in which the weight or mass of the material loaded into semi-trailer 120 is evenly distributed along the longitudinal length of semi-trailer 120. The position along the longitudinal length of semi-trailer 120 is represented by the X-axis in graph 130. The weight or mass of material transferred to semi-trailer 120 is represented by the Y-axis in graph 130. When controlling in accordance with the fill profile depicted in FIG. 3, material transfer vehicle 106 moves to a position so that the initial transfer point of material into semi-trailer 120 is at the position X1. Then, the fill operation commences until the weight or mass at position X1 reaches the level M1. At that point, weight versus position unloading control system 124 controls the propulsion and steering subsystems of material transfer vehicle 106 to move the transfer point of material into semi-trailer 120 rearwardly in semi-trailer 120 while the weight or mass of the material transferred continues to increase. Unloading control system 124 continues to change the position of the transfer point of material into semi-trailer 120 (either by controlling the propulsion and steering subsystems to move material transfer vehicle 106 or by controlling the position of the conveyor 112 and/or spout 114, or by controlling one or more of those subsystems), moving the transfer point rearward until the position X2 is reached, at which point the mass of material transferred to semi-trailer 120 is represented by M2 in the graph 130 shown in FIG. 3. Therefore, the rate at which material is transferred from grain cart 110 to semi-trailer 120 will influence the speed at which the transfer point is shifted rearwardly so that, when the final weight or mass M2 is reached, the transfer point is toward the rear of semi-trailer 120, as indicated by position X2.

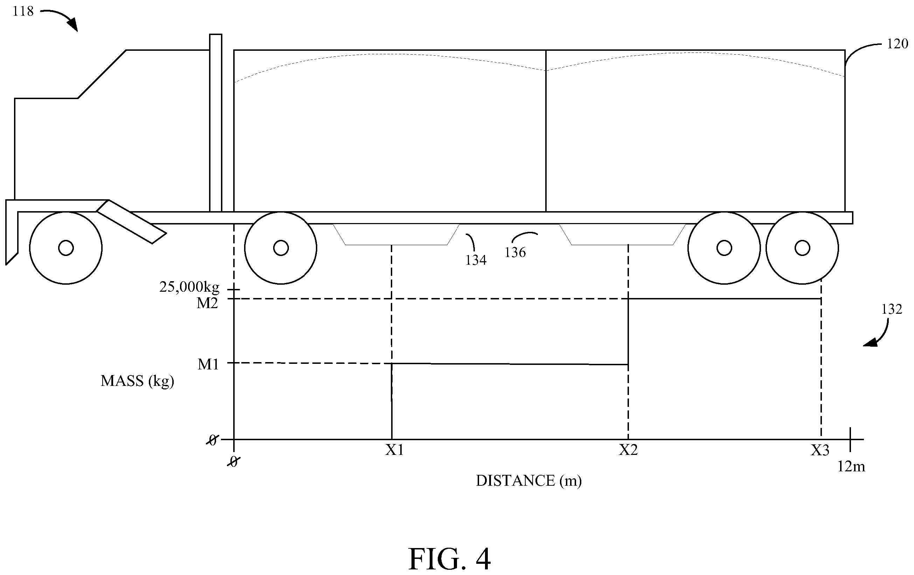

FIG. 4 has a graph 132 which illustrates another fill profile in which semi-trailer 120 is a double hopper bottom trailer having a forward hopper 134 and a rearward hopper 136. In the example illustrated in FIG. 4, material transfer vehicle 106 is moved so that the first transfer point of material into semi-trailer 120 is represented by position X1, roughly corresponding to the center of the forward hopper 134. The unloading operation is commenced and continues at position X1 until the mass M1 is delivered to the front portion of semi-trailer 120. At that point, unloading control system 124 controls material transfer vehicle 106 to move the landing point of material in semi-trailer 120 to the position represented by X2 in graph 132, roughly corresponding to the center of rearward hopper 136. Again, the unloading operation is commenced and continues until the mass represented by M2 in graph 132 is transferred to the rear section of semi-trailer 120. At that point, the unloading operation is terminated, such as by closing gate 111, stopping conveyor 112, etc.

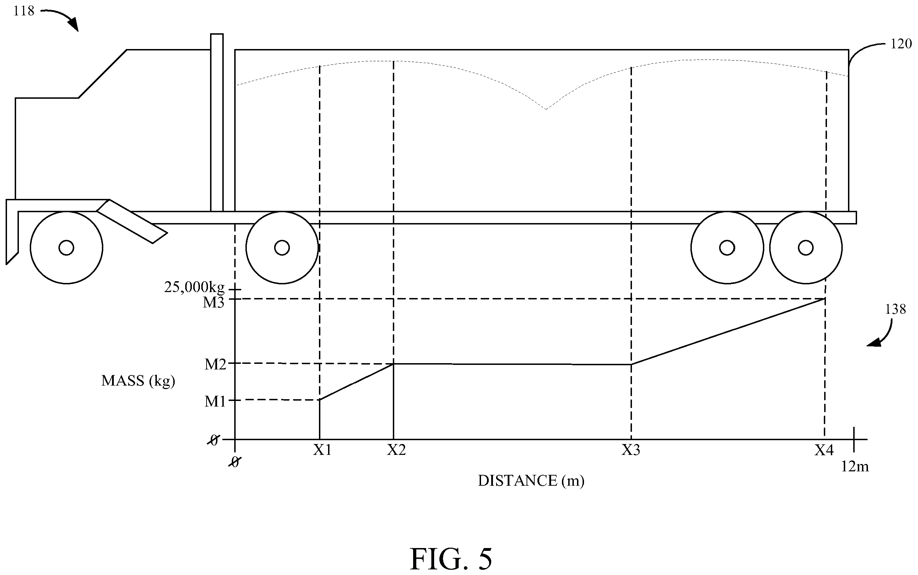

FIG. 5 includes a graph 138 which illustrates yet another fill profile, in an example in which the weight in haulage vehicle 118 is preferably distributed over, or close to, the axles of haulage vehicle 118. It can be seen in FIG. 5 that material transfer vehicle 106 is first controlled to begin the unloading operation at the position represented by X1. Material is transferred until the mass of the material reaches the value represented by M1, at which point material transfer vehicle 106 begins moving the transfer point rearward in semi-trailer 120, while continuing to unload, until the mass delivered to semi-trailer 120 reaches the value represented by M2, at the position represented by X2. At that point, material transfer vehicle 106 stops the unloading operation (such as by closing gate 111 or stopping the conveyor 112) and is controlled so that the next transfer point is represented by X3, at which point the unloading operation continues. Again, unloading control system 124 continues to move the transfer point rearward in semi-trailer 120, while continuing to unload material, until the final mass of material represented by M3 has been loaded into semi-trailer 120 as the material transfer vehicle 106 reaches the final transfer point represented by X4. In the example shown in FIG. 5, it can be seen that the material is preferably transferred first into a forward portion of semi-trailer 120 (roughly over the forward axle of semi-trailer 120), and then into a rearward portion of trailer 120, roughly over the two rear axles of semi-trailer 120. FIGS. 3-5 show examples of mass/weight versus fill position profiles, and other such profiles can be used as well.

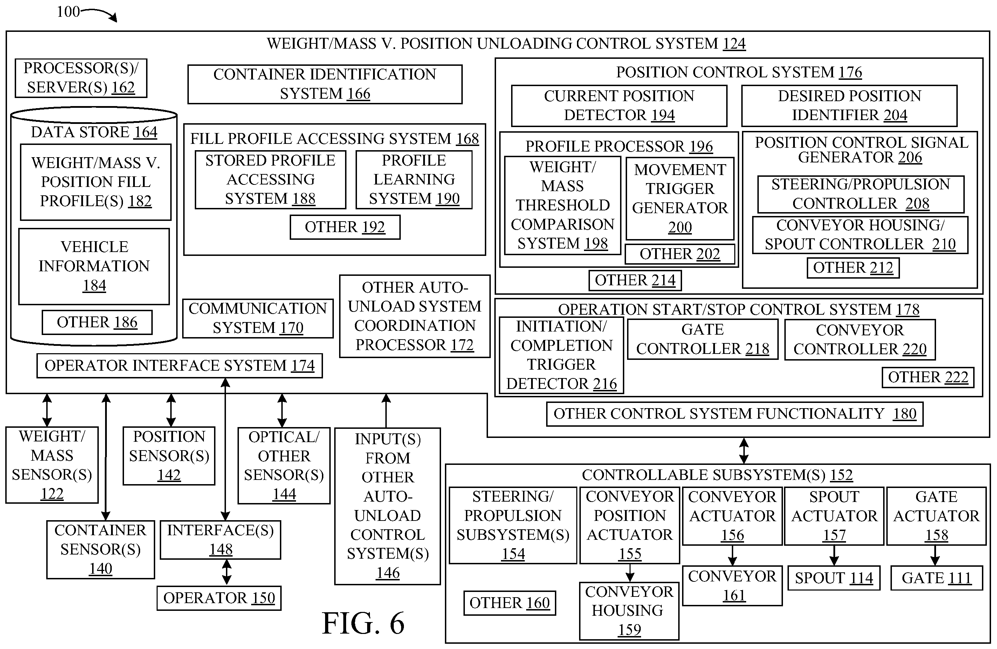

FIG. 6 is a block diagram showing some portions of agricultural system 100 in more detail. Some of the items shown in FIG. 6 are similar to those shown in previous figures, and they are similarly numbered. FIG. 6 shows that weight versus position unloading control system 124 receives inputs from a plurality of different sensors, such as weight/mass sensor 122, container sensor(s) 140, position sensor 142, optical/other sensor(s) 144, and inputs 146 from other auto-unload control systems 126. FIG. 6 shows that unloading control system 124 also generates one or more interfaces 148 for interaction by operator 150. Operator 150 may be a human operator or an automated operator, or a hybrid operator which includes an automated operator that receives inputs from a human operator. FIG. 6 also shows that unloading control system 124 generates outputs to control a plurality of different controllable subsystems 152. Controllable subsystems 152 can include steering and propulsion subsystems 154 for material transfer vehicle 106, conveyor position actuator 155 (that controls the position of the conveyor housing 159 of conveyor 112, conveyor actuator 156 (which may be a power takeoff or other actuator that powers), , the conveyor 161 in conveyor housing 159), and spout actuator 157 (that controls the position of spout 114.) Controllable subsystems 152 can also include gate actuator 158 that controls gate 111, and any of a variety of other controllable subsystems 160. Controllable subsystems 152 can also include operator interface system 174 and other systems.

Position sensor(s) 142 sense a position within a local or global coordinate system and provide a sensor signal indicative of that position. Thus, position sensor(s) 142 may include a global navigation satellite system (GNSS) receiver, a dead reckoning system, inertial measurement units and/or accelerometers or other dead reckoning mechanisms, a cellular triangulation system, or any of a wide variety of other sensors. Optical and other sensors 144 can include cameras, LIDAR sensors, RADAR sensors, ultra-low frequency sensors, and/or any of a wide variety of other sensors that may be located on material transfer vehicle 106, on haulage vehicle 118, or elsewhere, that provide sensor signals indicative of sensed variables. The sensors 144 may include processing systems, such as image processing systems or other signal processing systems that process the sensor signals and generates outputs indicative of those signals. Inputs 146 from other auto-unload control systems 126 may include inputs that indicate whether system 126 is to have automated control of the unloading operation or whether unloading control system 124 is to have automated control of the unloading operation. The inputs 146 can include other inputs as well.

FIG. 6 also shows that, in one example, unloading control system 124 can include one or more processors or servers 162, data store 164, container identification system 166, fill profile accessing system 168, communication system 170, other auto-unload system coordination processor 172, operator interface system 174, position control system 176, operation start/stop control system 178, and other control system functionality 180. Data store 164 can include one or more weight/mass versus position fill profiles 182, vehicle information (which may include information for haulage vehicle 118, such as dimensions, capacity, restrictions, etc.) 184, and any of a wide variety of other data 186. Fill profile accessing system 168 can include stored profile accessing system 188, profile learning system 190, and other items 192. Position control system 176 can include current position detector 194, profile processor 196 (which can include weight/mass threshold comparison system 198, movement trigger detector 200, and other items 202), desired position identifier 204, position control signal generator 206 (which can include steering/propulsion controller 208, conveyor housing/spout controller 210, and other items 212), as well as other position control system functionality 214. Operation start/stop control system 178 can include completion trigger detector 216, gate controller 218, conveyor controller 220, and other functionality 222. Before describing the overall operation of agricultural system 100 in more detail, a description of some of the items in agricultural system 100, and their operation, will first be provided.

Weight/mass versus position fill profiles 182 (fill profiles 182) may be profiles (such as those described above with respect to FIGS. 3-5 or other such profiles) that may be indexed by container, container type, etc. For instance, there may be a fill profile 182 corresponding to a double hopper bottom type of semi-trailer and a different fill profile 182 for a single hopper bottom semi-trailer. Further, there may be fill profiles 182 for specifically identified trailers or containers. Other fill profiles 182 may be provided and indexed in other ways as well. It will be noted that the fill profiles 182 may be default fill profiles, fill profiles previously entered by an operator, fill profiles that have been learned (as will be discussed in greater detail elsewhere), or other fill profiles.

Vehicle information 184 may be dimensions for the particular container that is to be filled, or for the container type, or for other identified containers. The dimensions may include the dimensions of the semi-trailer 120, the weight capacity or volume capacity (or both) of semi-trailer 120, weight restrictions which may be entered by an operator, or may be defined by regulation or in other ways, among other information.

Container identification system 166 receives an input from container sensor(s) 140 and/or from operator 150 indicative of a container identifier (container id) and identifies the container to be loaded. Container sensor(s) 140 may be a sensor that senses the container id. Container identification system 166 may identify the container id based upon an input by operator 150 that selects the container from a list of containers, or that otherwise defines or identifies the container.

Fill profile accessing system 168 then accesses a fill profile 182 based upon the identified container. Stored profile accessing system 188 accesses data store 164 to identify the particular weight/mass versus position fill profile 182 corresponding to the identified container. Based upon the way that the fill profiles 182 are indexed, stored profile accessing system 188 may access the fill profile 182 using information from container identification system 166 identifying the container.

Where no fill profile 182 exists for the identified container, then profile learning system 190 may learn the weight/mass versus position fill profile for the identified container. Profile learning system 190 can be triggered based upon an operator input from operator 150, based upon an indication from stored profile accessing system 188 that no fill profile 182 exists for the identified container, or in other ways. For instance, operator 150 or another auto-unload control system 126 can control the unloading operation with respect to the identified container. Profile learning system 190 can receive mass/weight signals from sensors 122 and position signals from position sensor 142. Profile learning system 190 can also receive other inputs from other sensors 144, such as an input indicating the position of gate 111, the speed of conveyor actuator 156, the orientation (e.g., pitch, roll, yaw) of conveyor housing 159 and spout 114, and/or other items, and learn the weight/mass versus position fill profile 182 for the identified container.

In one example, the conveyor 112 is an auger powered by a power takeoff (PTO) on the tractor 108, and the PTO speed is sensed and saved to learn the fill profile. Gate 111 can move between fully open and fully closed. The combination of gate position and conveyor speed influence how fast material leaves cart 110. Thus, the gate position can also be sensed by a sensor such as a string potentiometer or an ultrasound sensor and saved to learn the fill profile. The position and orientation of conveyor 112, and/or spout 114 can sometimes be controlled to direct material further forward or rearward in semi-trailer 120, or further to one side or the other. The position and orientation of conveyor 112 and/or spout 114 can be sensed by an inertial measurement unit (IMU) or another sensor and saved to learn the fill profile. The tractor position (or motion) can be sensed using a GNSS receiver, a wheel speed encoder, or another sensor and saved to learn the fill profile. The weight of material in the cart can be sensed using a load cell or in other ways and saved to learn the fill profile. The sensor outputs can be broadcast by communication system 170 (e.g. a CAN bus) and sampled and saved in units or in percentages (e.g. the weight can be stored in Ibs. or percent full, etc.) The sensor outputs can be stored, for example, once for every 750lbs of transferred material or at a different frequency.

Once the sensor values are saved, they can be played back to execute a subsequent unloading operation. Thus, the gate percent open, spout and conveyor orientation, PTO speed and tractor motion (e.g. tractor movement along semi-trailer 120) can all be controlled based on the weight of material transferred. The operator 150 may be allowed to enter a desired weight that is different from the saved weight (e.g. in the saved profile, assume that 54,000lbs of material was unloaded, but the operator may select to unload only 52,000lbs during the playback.) The operator may also initiate playback of the saved profile through a user interface. The controlled subsystems will then be controlled as a function of transferred weight of material or trailer weight.

Communication system 170 enables communication of the items in unloading control system 124 with one another and also enables communication over a network with one or more other vehicles, other systems, etc. Thus, communication system 170 can be a controller area network (CAN) bus and bus controller, as well as a communication system that communicates over a wide area network, a local area network, a near field communication network, a Wi-Fi or Bluetooth network, a cellular communication network, or any of a wide variety of other networks or combinations of networks.

Operator interface system 174 can include operator interface mechanisms that provide outputs to operator 150 and receive inputs from operator 150. The operator interface mechanisms may include such things as a steering wheel, joysticks, pedals, linkages, buttons, levers, a display device that displays information to operator 150 through interfaces 148 and that receives inputs from operator 150 through interfaces 148, or any of a wide variety of other devices that provide audio, visual, and/or haptic outputs to operator 150 and receive inputs from operator 150. Operator interface system 174 can generate outputs over the operator interface mechanisms and detect operator interactions with those mechanisms to receive inputs from operator 150.

Other auto-unload system coordination processor 172 receives inputs 146 and processes those inputs to coordinate the operation of unloading control system 124 and other auto-unload control systems 126 so that one or the other of the systems 124 and 126 can assume automated control of all or parts of the unloading operation and relinquish control when appropriate.

Position control system 176 identifies a current transfer position which may be determined based on the position of material transfer vehicle 106 (or a part of material transfer vehicle, such as the outlet of spout 114) relative to the container 118 and determines when to change the transfer position based upon the weight/mass versus position fill profile 182 for the identified semi-trailer 120 (or other container). Therefore, current position detector 194 detects the current transfer position, such as the position of as the position of material transfer vehicle 106 relative to the position of the semi-trailer 120. Detector 194 may detect that based upon sensor inputs, such as inputs from an optical sensor or position sensor(s) 142 or another sensor, or communication inputs from semi-trailer 120 that identify the current transfer position. Detector 194 may receive an indication of the current relative position of vehicle 106 relative to container 118 from another auto-unload control system 126. Profile processor 196 accesses the weight/mass versus position fill profile 182 and determines when the transfer position should be changed. Weight/mass threshold comparison system 198 compares the current weight unloaded at the current transfer position to a threshold weight identified in the weight/mass versus position fill profile 182 (corresponding to the current transfer position to determine when the relative position of vehicle 106 relative to container 118 should be changed. Movement trigger generator 200 receives an input from system 198 indicating that the transfer position should be changed and generates a trigger output to desired position identifier 204. Based upon the trigger output from movement trigger generator 200, desired position identifier 204 identifies the new desired transfer position. The new transfer position of the vehicle 106 relative to the container 118 may be identified as a position determined during runtime or pre-determined and represented in the weight/mass versus position profile 182 or elsewhere. The new transfer position may be based upon the fill profile and based upon the current transfer position. For instance, it may be that the new desired transfer position is displaced one meter along the longitudinal length of semi-trailer 120 from the current transfer position. The minimum step size in changing the transfer position as well as the threshold weight or mass level at which a change in transfer position is to be initiated may be default values, values that are empirically set, values that are input from the operator, machine learned values, or values that are provided in other ways.

Once the new transfer position is identified, desired position identifier 204 provides an output indicative of the new transfer position to position control signal generator 206. Position control signal generator 206 determines which subsystems need to be controlled in order to begin transferring material to the container 118 at the new transfer position. For instance, it may be that the entire material transfer vehicle 106 needs to be repositioned along semi-trailer 120 (or that semi-trailer 120 needs to be re-positioned or that both vehicle 106 and semi-trailer 120 need to be re-positioned) in order to transfer material at the new transfer position. In another example, it may be that the conveyor housing 159 and/or spout 114 can be positioned to transfer material at the new transfer position. Steering/propulsion controller 208 generates an output to control the steering/propulsion subsystems 154 in order to move material transfer vehicle 106 to load material at the new transfer position. Conveyor housing/spout controller 210 generates control signals to control the conveyor position actuator 155 to position the conveyor housing 159 and to control the conveyor actuators 156 and spout actuator 157 so that the conveyor housing 159 and spout 114 can be moved to transfer material at the new transfer position. Other generators 212 can generate control signals, for example, to control operator interface system 174 to generate an output informing operator 150 that one or other of the vehicles should be moved to the new transfer position. These are examples only.

Operation start/stop control system 178 generates control signals to control starting and stopping of the unloading operation. For instance, initiation/completion trigger detector 216 detects trigger criteria indicating that the unloading operation should be started and also detects trigger criteria indicating that the unloading operation should be stopped. By way of example, once position control system 176 determines that the material transfer vehicle 106 is configured to unload material at the initial desired transfer position, then initiation/completion trigger detector 216 may detect this as a trigger and determine that the unloading operation should be initiated or commenced. In that case, gate controller 218 generates a control signal to control gate actuator 158 to open gate 111. Conveyor controller 220 generates a control signal to control conveyor actuator 156 to start conveyor 161 transferring material. Similarly, initiation/completion trigger detector 216 may receive an output from position control system 176 indicating that the desired transfer position is the final desired transfer position in the fill profile for this semi-trailer 120, and that the weight of material transferred at that final transfer position is within a threshold level of a final desired weight or mass of material. In that case, initiation/completion trigger detector 216 may detect this as a trigger indicating that the material unloading operation should be stopped. In response, gate controller 218 may generate control signals to control gate actuator 158 to close gate 111. After a cleanout time interval in which material is cleaned out of the conveyor housing 159, then conveyor controller 220 may generate control signals to control the conveyor actuator 156 to stop the conveyor 161.

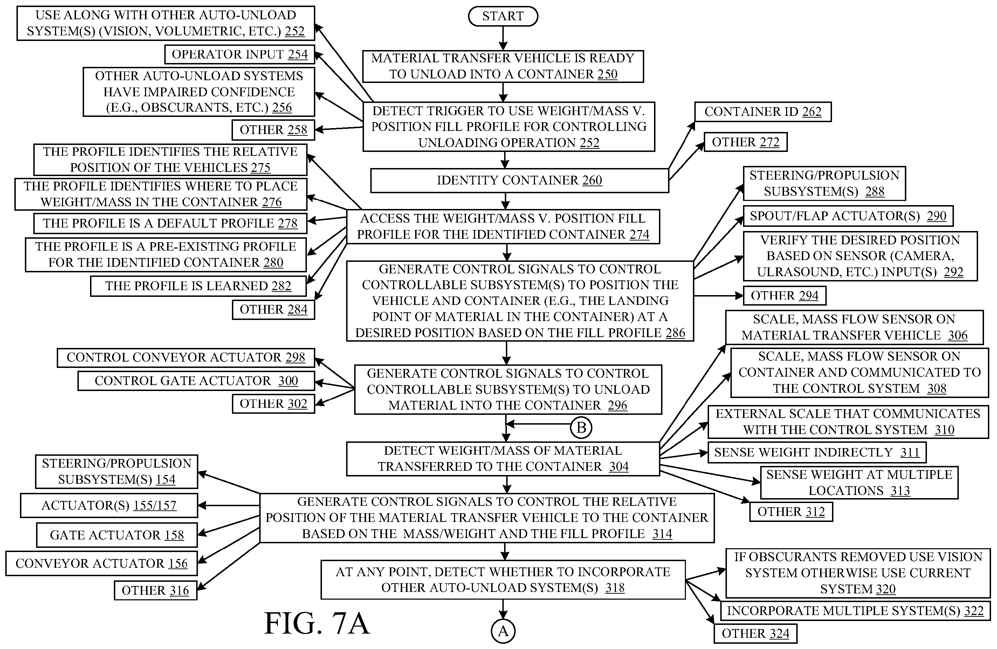

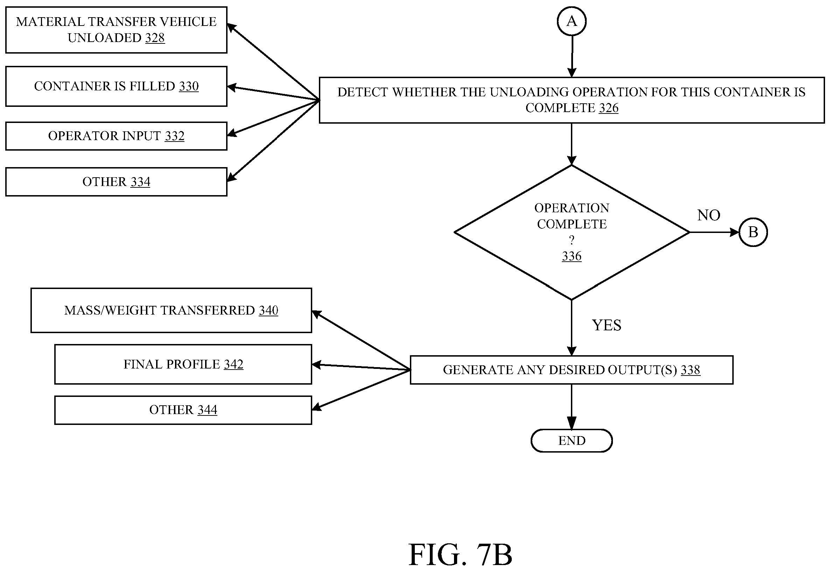

FIGS. 7A and 7B (collectively referred to herein as FIG. 7) show a flow diagram illustrating one example of the operation of agricultural system 100 in performing an unloading operation based on a weight/mass position fill profile 182. It is first assumed that material transfer vehicle 106 is ready to unload material into a container, such as semi-trailer 120, as indicated by block 250 in the flow diagram of FIG. 7. Other auto-unload system coordination processor 172 then detects a trigger to use weight/mass versus position unloading control system 124 and a weight/mass versus position fill profile 182 in order to control the unloading operation, as indicated by block 252. In one example, the trigger is an operator input 254 provided by operator 150 indicating that unloading control system 124 should commence controlling the unloading operation. In another example, coordination processor 172 determines that the weight/mass versus position unloading control system 124 is to operate in conjunction with another auto-unload control system 126 (such as a vision-based system, a volumetric system, etc.), as indicated by block 256. For instance, coordination processor 172 may determine that a vision-based unload control system 126 should be used to verify the initial transfer position of material into semi-trailer 120 (e.g. the initial landing point of material in semi-trailer 120), and then the weight/mass versus position unloading control system 124 should take over controlling the unloading operation. This is just one example of how multiple systems can be used in coordination with one another, and other ways are contemplated as well.

In another example, coordination processor 172 may detect, as a trigger, a condition under which vision-based unloading control system 126 may have impaired confidence. Such a condition may occur when obscurants impede the ability of the vision-based unloading control system to capture an image inside semi-trailer 120. Detecting a trigger indicating that the other auto-unload control system 126 has impaired confidence is indicated by block 256 in the flow diagram of FIG. 7. Coordination processor 172 may detect another type of trigger indicating that weight/mass versus position unloading control system 124 should be used to control the unloading operation as indicated by block 258 in the flow diagram of FIG. 7.

Container identification system 166 then identifies the container into which material is to be unloaded. Identifying the container is indicated by block 260 in the flow diagram of FIG. 7. In one example, container identification system 166 obtains a container id through an operator interface as indicated by block 262. Container identification system 166 can identify the container in other ways as well, as indicated by block 272.

Once the container is identified, fill profile accessing system 168 accesses the weight/mass versus position fill profile for the identified container, as indicated by block 274. That fill profile may identify the relative position of the vehicle 106 and container 118 with respect to transferred weight or mass, as indicated by block 275. The fill profile may identify where, in the container, to place the weight or mass of material, as indicated by block 276. The fill profile may indicate a distance that material transfer vehicle 106 should travel for every X pounds of material transferred. For instance, once material transfer vehicle 106 is positioned at a desired starting point relative to container 118, the fill profile may indicate that the material transfer vehicle 106 should transfer X pounds of material per meter of travel of material transfer vehicle 106 along container 118 (or per meter of travel of container 118 along material transfer vehicle 106). In this way, material transfer vehicle 106 only needs to be properly located and oriented relative to container 118 at the beginning of the operation, and the unloading operation can be controlled according to the fill profile by monitoring the weight of material transferred and the distance of travel. The fill profile can be one of those described above with respect to FIGS. 3-5 or another fill profile.

In one example, the fill profile accessing system 168 accesses a default fill profile for the container, as indicated by block 278. In another example, the fill profile is a pre-existing profile for the identified container, which may have been previously accessed or downloaded and stored in data store 164, as indicated by block 280. In another example, profile learning system 190 learns the fill profile and stores that fill profile 182 in data store 164 for access, as indicated by block 282. The weight/mass versus position fill profile for the identified container can be accessed in other ways as well, as indicated by block 284.

Control system 176 and/or control system 178 then generate control signals to control the controllable subsystems 152 (including, in one example, operator interface system 174 and communication system 170) in order to position the material transfer vehicle 106 relative to the container 118 to obtain a desired transfer position (e.g., to position the landing point) of the material in the container) based upon the fill profile. Generating control signals to control the desired transfer position is indicated by block 286 in the flow diagram of FIG. 7. In one example, the control signals can control the steering and/or propulsion subsystems 154 of material transfer vehicle 106 in order to move the entire material transfer vehicle 106 along container 118 based on the fill profile. Controlling the steering and/or propulsion subsystems is indicated by block 288 in the flow diagram of FIG. 7. In another example, the control signals can control the conveyor position actuator 155, the conveyor actuator 156, and/or spout actuators 157 to control the position of the conveyor housing 159, conveyor 161, and/or spout 114 in order to change the unloading position according to the fill profile, as indicated by block 290. Also, in one example, position control system 176 can verify when the current transfer position is at the desired transfer position based upon sensor inputs, such as from optical or other sensors 144, from container sensors 140, from position sensors (e.g. GNSS sensors on vehicle 106 and container 118) based on inputs from other auto-unload control systems 146, etc. Verifying that the current transfer position is the desired transfer position is indicated by block 292 in the flow diagram of FIG. 7. Control signals to control the controllable subsystems 152 can be generated in other ways as well, as indicated by block 294. For example, other control signal generators 212 can control operator interface system 174 to notify operator 150 that it is time to move material transfer vehicle 106. In another example, control signal generator 212 can control communication system 170 to notify the operator of the semi-truck 118 that it is time to move to a different position. These are only examples.

When the unloading operation is being commenced, operation start/stop control system 178 generates control signals to begin conveying material from material transfer vehicle 106 into the container 118. Generating control signals to unload material into the container 118 is indicated by block 296 in the flow diagram of FIG. 7. For instance, conveyor controller 220 can generate control signals to control the conveyor actuator 156 to drive conveyor 161 at a desired speed, as indicated by block 298. Gate controller 218 can generate control signals to control gate actuator 158 to open the gate 111 to a desired position, as indicated by block 300. Other controllers 222 can generate other control signals to control other controllable subsystems 152 in order to unload material into the container 118, as indicated by block 302.

Weight/mass sensors 122 then detect the weight or mass of material transferred to the container at the current material transfer position, as indicated by block 304 in the flow diagram of FIG. 7. As discussed above, the weight/mass sensors 122 can be one or more scales or mass flow sensors on material transfer vehicle 106, as indicated by block 306 in the flow diagram of FIG. 7. The sensors 122 can be one or more scales or mass flow sensors on the container in which case the weight or mass signals can be communicated to control system 124, as indicated by block 308 in the flow diagram of FIG. 7. The weight/mass sensors 122 can be one or more external scales that the grain cart 110 and/or container (e.g., semi-trailer 120) are located on, which also communicate the weight or mass signal to control system 124, as indicated by block 310 in the flow diagram of FIG. 7. The weight sensors 122 may indirectly sense weight such as by sensing the measure or pressure of fluid introduced into a suspension system on semi-trailer 120, as indicated by block 311. Also, an indication of weight can be sensed by multiple sensors located along the container (e.g., on front and rear axles), and a fill profile can be estimated based on the multiple sensor signals, as indicated by block 313. The weight or mass of material can be sensed and provided to unloading control system 124 in other ways as well, as indicated by block 312 in the flow diagram of FIG. 7.

Position control system 176 then generates control signals to control the position where the material transfer is occurring, such as the position of the landing point in the container (e.g., in semi-trailer 120), the position of material transfer vehicle 106 relative to container 118, the distance that vehicle 106 has traveled, based upon the mass or weight of material transferred and based upon the weight/mass versus position fill profile for the container. Generating such control signals is indicated by block 314 in the flow diagram of FIG. 7. The relative position of material transfer vehicle 106 relative to container 118 can be determined in a variety of different ways. For example, the relative position can be determined based on the position of material transfer vehicle 106 (as indicated by a GNSS receiver, for instance) and the position of container 218 (also indicated by a GNSS receiver). The relative position can be determined using a RADAR sensing system, or other system. The relative position can be determined by computing or otherwise knowing an initial relative position and then tracking relative position based on the transmission speed of vehicle 106 (or semi 118) as sensed by a transmission speed sensor. The relative position can be determined in other ways as well. Profile processor 196 determines when the mass or weight of material transferred at a desired position is within a threshold level of the desired mass or weight for that position and, when that occurs, movement trigger generator 200 generates a movement trigger and provides an output to desired position identifier 204 to identify the next relative position of material transfer vehicle 106 relative to container 118 (e.g., the next landing point of material in semi-trailer 120). Based upon the identified next position, position control signal generator 206 generates control signals so that material transfer vehicle 106 moves relative to semi-trailer 120 to the next position to transfer material to the next desired position. Steering/propulsion controller 208 can generate control signals to control the steering/propulsion subsystems 154 when the entire material transfer vehicle 106 is to move, as indicated by block 316 in the flow diagram of FIG. 7. Conveyor housing/spout controller 210 can generate control signals to control the conveyor position actuator 155 to move the conveyor housing 159 and/or the spout actuator 157 to move spout 114 to direct material to the next desired transfer position, as indicated by block 318 in the flow diagram of FIG. 7.

When it is time to stop the material transfer (e.g., when grain cart 110 is empty or when semi-trailer 120 has been filled to a desired level according to the fill profile) then gate controller 218 can control gate actuator 158 to control the position of gate 111. Conveyor controller 220 can control the conveyor actuators 156 to control the conveyor 161. Other control signals can be generated to control other subsystems (such as operator interface system 174, communication system 170, or other controllable systems or subsystems) as well, as indicated by block 316 in the flow diagram of FIG. 7.

It will be noted that, at any point during the unloading operation, other auto-unload system coordination processor 172 may detect inputs indicating that control should be coordinated with other auto-unload control systems 126. The coordination can be to switch from using unloading control system 124 to using another auto-unload control system 126, or to use functionality of both unloading control systems 124 and 126 in performing the unloading operation (e.g., using a vision-based auto-unload control system 126 to verify position and using weight/mass versus position unloading control system 124 to control transfer of material, or otherwise). Detecting a trigger to incorporate another auto-unload control system 126 in controlling the unloading operation is indicated by block 318 in the flow diagram of FIG. 7.

As one example, assume that the reason why a different auto-unload control system 126 is not being used is that its function was impaired by unfavorable environmental conditions. Assume further that the environment has now become more favorable. For instance, if the other auto-unload control system 126 is a vision-based system and a cloud of dust or other obscurants was impairing the image capture device, but that cloud of dust has dissipated, then this may indicate that the vision-based auto-unload system 126 again should be used, as indicated by block 320 in the flow diagram of FIG. 7. Coordinating the functionality of multiple auto-unload control systems is indicated by block 322. Coordination processor 172 can detect input triggers and coordinate the operation of multiple auto-unload control systems in other ways as well, as indicated by block 324 in the flow diagram of FIG. 7.

At some point, initiation/completion trigger detector 216 detects that the unloading operation for this particular container is complete, as indicated by block 326 in the flow diagram of FIG. 7. For instance, the unloading operation may be complete if the material transfer vehicle 106 is completely unloaded, as indicated by block 328 in the flow diagram of FIG. 7. The unloading operation may be complete if the container (e.g., semi-trailer 120) is filled, as indicated by block 330 in the flow diagram of FIG. 7. The unloading operation may be complete if an operator 150 provides an input indicating that the operator wishes to stop the unloading operation or otherwise indicates that the unloading operation is complete, as indicated by block 332 in the flow diagram of FIG. 7. Detecting whether the unloading operation for this container is complete can be performed in other ways as well, as indicated by block 334.

Until the operation is complete, as determined at block 336, then processing reverts to block 304 to generate control signals to unload material into the container while the weight or mass of the material transferred is detected. If, at block 336, it is determined that the unloading operation for this container is complete, then communication system 170 generates any desired outputs, as indicated by block 338 in the flow diagram of FIG. 7. For instance, the outputs can include the mass or weight of material transferred during the unloading operation, as indicated by block 340, the final fill profile that was achieved during the unloading operation, as indicated by block 342, or any of a wide variety of other outputs, as indicted by block 344.

It can thus be seen that the present description describes a system that uses mass or weight to control an unloading operation in which material is transferred from an agricultural material transfer vehicle to a container, such as a semi-trailer. A weight/mass versus position fill profile is obtained for the container, and the unloading operation is automatically controlled to transfer material to the container according to the weight/mass versus position fill profile. Thus, the container can be filled to a desired fill profile even when other auto-unload control systems are impaired or are operating with lower confidence than is desired.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, sensors, generators, detectors, identifiers, and/or logic. It will be appreciated that such systems, components, sensors, generators, detectors, identifiers, and/or logic can be comprised of hardware items (such as processors and associated memory, or other processing components, some of which are described below) that perform the functions associated with those systems, components, sensors, generators, detectors, identifiers, and/or logic. In addition, the systems, components, sensors, generators, detectors, identifiers, and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components, sensors, generators, detectors, identifiers, and/or logic described above. Other structures can be used as well.

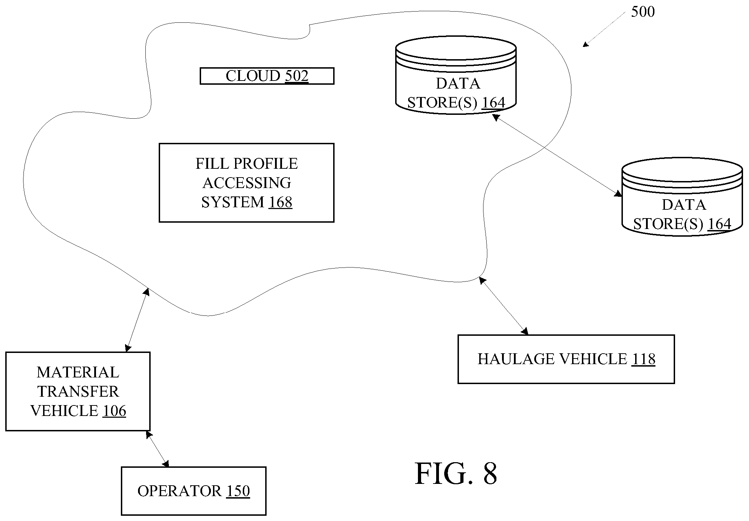

FIG. 8 is a block diagram of agricultural system 100, shown in other FIGS., except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or the components and functions can be installed on client devices directly, or in other ways.

In the example shown in FIG. 8, some items are similar to those shown in previous FIGS. and they are similarly numbered. FIG. 8 specifically shows that fill profile accessing system 168, and data store 164 can be located at a remote server location 502. Therefore, agricultural system 100 accesses those systems through remote server location 502.

FIG. 8 also depicts another example of a remote server architecture. FIG. 8 shows that it is also contemplated that some elements of previous FIGS are disposed at remote server location 502 while others are not. By way of example, data store 164 or other systems can be disposed at a location separate from location 502, and accessed through the remote server at location 502. Regardless of where the items are located, the items can be accessed directly by system 100, through a network (either a wide area network or a local area network), the items can be hosted at a remote site by a service, or they can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

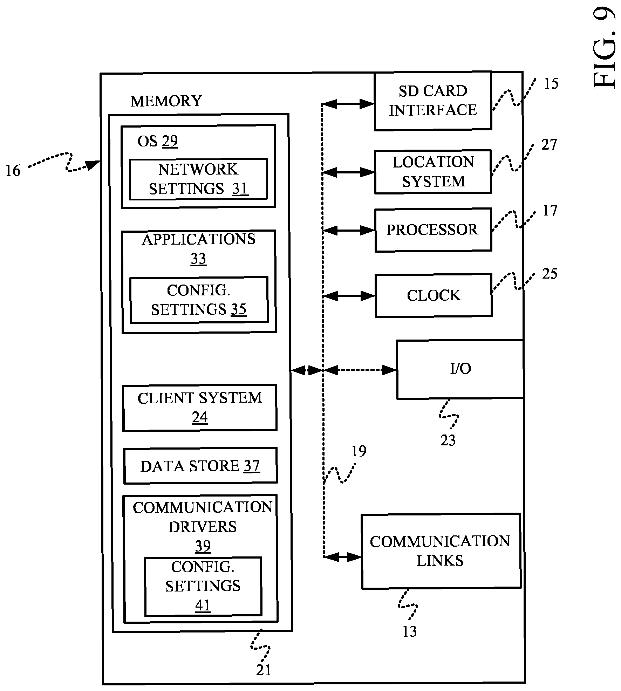

FIG. 9 is a simplified block diagram of one illustrative example of a handheld or mobile computing device that can be used as a user's or client's hand held device 16, in which agricultural system 100 (or parts of it) can be deployed. For instance, a mobile device can be deployed in the operator compartment of material transfer vehicle 106, haulage vehicle 118, and/or harvester 102 for use in generating, processing, or displaying the fill data. FIGS. 9-11 are examples of handheld or mobile devices.

FIG. 9 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

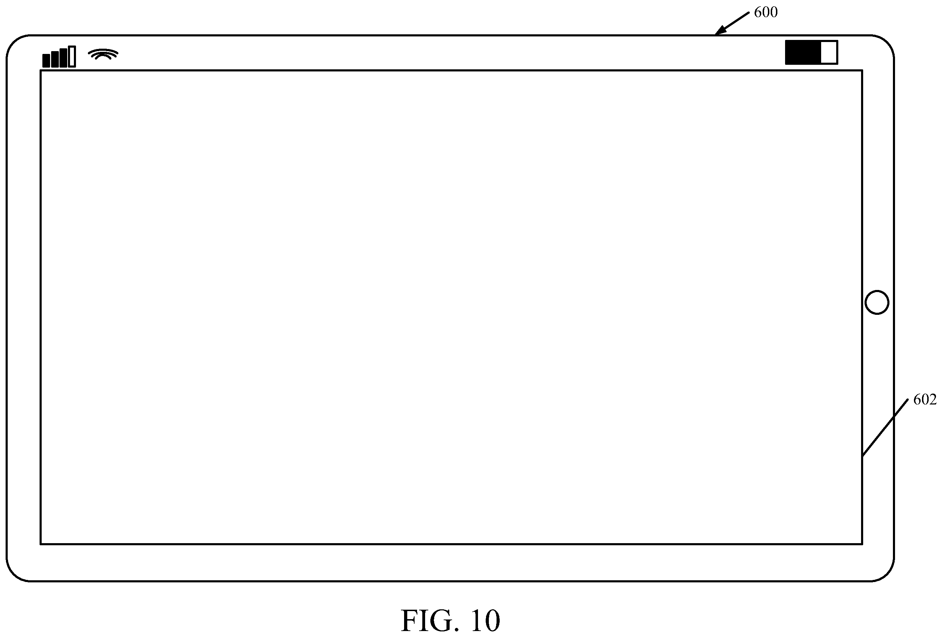

FIG. 10 shows one example in which device 16 is a tablet computer 600. In FIG. 10, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

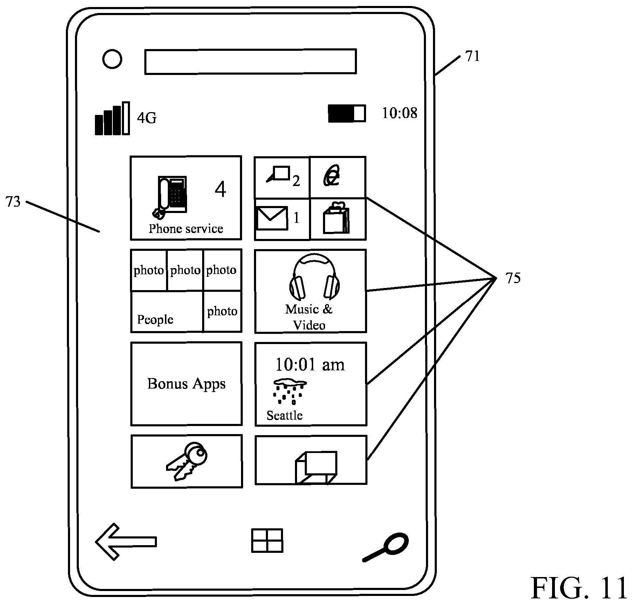

FIG. 11 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

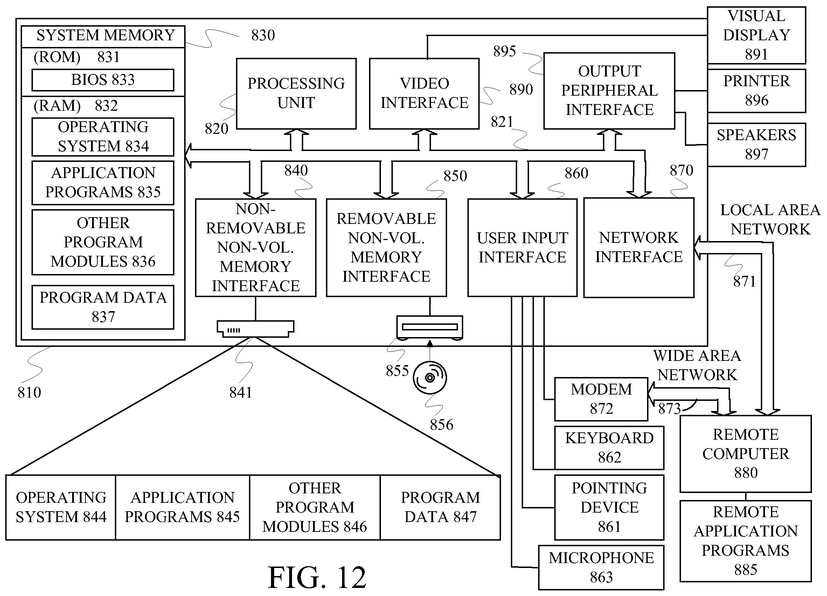

FIG. 12 is one example of a computing environment in which elements of previous FIGS., or parts of it, (for example) can be deployed. With reference to FIG. 12, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 12.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 12 illustrates operating system 834, application programs 835, other program modules 836, and program data 837.

The computer 810 may also include other removable/non-removable volatile/nonvolatile computer storage media. By way of example only, FIG. 12 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 12, provide storage of computer readable instructions, data structures, program modules and other data for the computer 810. In FIG. 12, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 12 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer implemented method, comprising:
accessing (274) a weight versus position fill profile (182) corresponding to a container (118);
generating (296) a control signal to control a conveyor (161) to convey material from a material transfer vehicle (106) to the container (118);
receiving (304) a weight signal indicative of a weight of material conveyed from the material transfer vehicle (106) to the container (118); and
generating (314) a set of control signals to control a controllable subsystem (152) on the material transfer vehicle (106) to transfer material to the container (118) based on the weight signal and based on the weight versus position fill profile (182).

2. The computer implemented method of claim 1 wherein generating (314) a set of control signals comprises:
Identifying (314) a target weight of material to be transferred to the container (118) at a current landing point in the container (118);
Comparing (198) the target weight of material to the weight of material conveyed to obtain a comparison result; and
Generating (314) the set of control signals based on the comparison result.

3. The computer implemented method of claim 2 wherein generating the set of control signals based on the comparison result comprises, when the comparison result indicates that the weight of material conveyed is within a threshold value of the target weight, then performing steps comprising:
Identifying (314) a next subsequent landing point of material in the container (118); and
Generating (154) the set of control signals to move the landing point of material in the container (118) to the next subsequent landing point.

4. The computer implemented method of claim 3 wherein generating the set of control signals to move the landing point of material in the container to the next subsequent landing point comprises:
Generating (154) a propulsion control signal to control a propulsion subsystem (154) on the material transfer vehicle (106) to move the material transfer vehicle (106).

5. The computer implemented method of claim 3 wherein the material transfer vehicle (106) includes a spout actuator (157) that is actuatable to change a position of a spout on the material transfer vehicle (106) and wherein generating the set of control signals to move the landing point of material in the container (118) to the next subsequent landing point comprises:
Generating (314) a spout actuator control signal to control the spout actuator (157) to move the spout.

6. The computer implemented method of claim 1 wherein receiving a weight signal comprises:
Sensing (304) the weight of material on the material transfer vehicle (106) with a weight sensor (306) on the material transfer vehicle (106); and
generating the weight signal with the weight sensor (306).

7. The computer implemented method of claim 1 wherein receiving a weight signal comprises:
Sensing (304) the weight of material in the container (118) with a weight sensor (308) on the container; and generating the weight signal with the weight sensor (308) on the container (118).

8. The computer implemented method of claim 1 wherein receiving a weight signal comprises:
Sensing (304) the weight of material conveyed with a sensor (310) external to the material transfer vehicle (106) and external to the container (118).

9. The computer implemented method of claim 8 wherein accessing a weight versus position fill profile (182) corresponding to a container (118) comprises:
Identifying (260) the container; and
Accessing (280) a weight versus position fill profile corresponding to the identified container (118).

10. The computer implemented method of claim 9 wherein identifying the container (118) comprises:
Capturing (144) an image of the container (118); and
Processing (260) the image to identify the container (118).

11. The computer implemented method of claim 1 and further comprising:
Generating (252) an additional set of control signals with an additional unload control system (172); and
coordinating controlling of material transfer (106) from the material transfer vehicle (106) to the container (118) based on the set of control signals and the additional set of control signals.

12. The computer implemented method of claim 11 wherein coordinating comprises:
Determining (256) whether the additional unload control system is impeded;
Generating (252) a trigger signal based on the determination; and
Controlling (296) the controllable subsystem (152) with the set of control signals or the additional set of control signals based on the trigger signal.

13. The computer implemented method of claim 1 wherein accessing a weight versus position fill profile (182) corresponding to a container (118) comprises:
conducting a first fill operation for the container (118); and
learning (282) the weight versus position fill profile corresponding to the container (118) from the first fill operation.

14. An agricultural operation control system for controlling an unloading operation to unload material from a material transfer vehicle (106) to a container (118), the agricultural operation control system comprising:
at least one processor (162);
a fill profile accessing system (168) configured to access a weight versus position fill profile (182) corresponding to the container (118); and
a position control system (176) configured to receive a weight signal indicative of a weight of material conveyed from the material transfer vehicle (106) to the container (118) and generate a control signal to control a controllable subsystem (152) on the material transfer vehicle (106) to transfer material to the container (118) based on the weight signal and based on the weight versus position fill profile (182).

15. The agricultural operation control system of claim 14 and further comprising:
a container identification system (116) configured to receive a container sensor signal (140) and identify the container (118) based on the container sensor signal (140).
